# EUROPEAN PATENT SPECIFICATION

(11) **EP 2 528 982 B1**
(45) Date of publication and mention of the grant of the patent: **27.05.2020**
(21) Application number: 11734415.0
(22) Date of filing: 25.01.2011
(51) Int. Cl.: C09K 3/18, C07C 53/06, C09K 5/20

(54) **THE USE OF A COMPOSITION WITH LOW CORROSIVE PROPERTIES**
VERWENDUNG EINER ZUSAMMENSETZUNG MIT NIEDRIGER KORROSION
UTILISATION D'UNE COMPOSITION DE FAIBLES PROPRIÉTÉS CORROSIVES

(30) Priority: 25.01.2010 FI 20105064
(43) Date of publication of application: 05.12.2012
(73) Proprietor: Oy Granula Ab Ltd, 48101 Kotka (FI)
(72) Inventor: AHLNÄS, Thomas, 48130 Kotka (FI); KUKKONEN, Jari-Jukka, 01600 Vantaa (FI)
(74) Representative: Berggren Oy, Helsinki & Oulu
(86) International application number: PCT/FI2011/050057
(87) International publication number: WO 2011/089322

(56) References cited:
- WO-A1-03/012001
- US-A1- 2002 003 223
- US-A1- 2003 034 478
- US-A1- 2010 016 187

## Description

### FIELD OF INVENTION

The invention relates to use according to claim 1.

The invention relates to the use of freezing point depressant compositions which are especially adapted for applications where the biodegradation and low BOD, anti-corrosion and non-scaling as well as biostatic properties are highly required for fluids. These used freezing point depressant compositions are fluids or solutions, which are prepared by mixing solvent to said fluids. The present invention relates to the use of environmentally benign freezing point depressant compositions for deicing surfaces and for preventing ice formation (anti-icing) on surfaces or within the compositions itself.

### BACKGROUND OF INVENTION

Freezing point depressant compositions are used widespreadly for variety of purposes, especially for lowering the freezing point of an aqueous system so that ice cannot be formed on surfaces or within the aqueous systems or for melting ice formed in those aqueous systems.

The effectiveness of the freezing point depressant compositions depends on the molar freezing point lowering effect, the number of ionic species that are made available and to the degree to which the compositions can be dispersed in the liquid phase. Water is the most common liquid phase in which the formation of ice is to be precluded or ice to be melted. Most freezing point depressant compositions are either based on salts such as sodium chloride or potassium formate or alcohols such as glycols and methanol.

Oil based hydraulic and heat transfer fluids have negative environment impact and they also form a favorable growth environment for microbes, from which there results formation of precipitates, and corrosion. The mineral and vegetable oils (bio oils) as well as biodegradable and non-toxic propylene glycol based fluids have the disadvantage that their viscosities increase to detrimentally high values at low temperatures e.g. for the most hydraulic and heat transfer oils the typical operating temperature is only -10 °C. Both ethylene and propylene glycol can operate at lower temperatures, even down to -30 °C, but especially in case of propylene glycol the pumping costs increase remarkably because of the poor heat and power transfer properties. The viscosity of hydraulic and metal cutting fluids should be within range of 10-50 mPas or even higher. The viscosity should not be too low. If the viscosity is very low, for example in order of 1 mPas, simple o-ring seals have to be abandoned in hydraulic equipment and other more expensive options must be used. The low viscosity of metal cutting fluid will cause weakening of the metal surface quality in case of metal cutting. Bio oils and mineral oils are very sensitive to moisture (typically maximum ca. 0.1 wt-%) and high temperatures. Oils are not water soluble, thus water containing acidic and corrosive compounds from oil will concentrate at the bottom of equipment and cause extremely corrosive environment. Separate phases of oil and water will cause pumping problems also. High temperatures will cause danger for fire.

Alkali and alkali-earth metal salts of carboxylic acid such as potassium formate, sodium formate, potassium acetate and sodium acetate have found increasing use in the area of heat transfer and power transfer (hydraulic) and deicing mainly due to their low environment impact and low viscosity at minus temperatures. When using these formate and acetate based alkali and alkali-earth metal salts as heat transfer fluids, they can operate even at -40°C without noticeable increase in the pumping costs. Corrosion is the drawback of these fluids. High electrical conductivity, over 200 mS/cm, and the tendency to form precipitates are the main reasons for the increased corrosion. Besides corrosion, the alkali and alkali-earth metal salts of carboxylic acid are prone to salting out and precipitate formation. Salt crystals formed at the cleavage of the pumps, on the inner surfaces of the nozzles may cause the whole heat transfer, hydraulic system or NO_{X} catalyst system to collapse. Pumps start leaking or the nozzles simply clog and thus the fluid cannot pass through. And, the corrosion underneath the crystal precipitates is very severe.

The deicing and anti-icing fluids and these fluid containing compositions, which are used in the airports, have been traditionally formulated from ethylene glycol, propylene glycol, and urea. Ethylene glycols are toxic and thus require expensive treatment and disposal. More safer fluid such as propylene glycol and urea biodegrade too rapidly imposing excess oxygen demand on the environment or the sewage treatment plant. As a consequence, airports were forced to switch to deicers such as compositions comprising fluids based on potassium formate and potassium acetate to reduce biological and chemical oxygen demand. However, a number of airports and air line companies have reported severe corrosion problems with these compositions. Catalytic oxidation (corrosion) of aircraft carbon-carbon composite brakes resulting from potassium formate and potassium acetate has become a major safety issue. Existing literature data has demonstrated that potassium, sodium, and calcium cations are responsible for the catalytic oxidation of carbon, not the formate or acetate anion itself. Furthermore, because potassium formate and potassium acetate have high electrical conductivities and they are prone to salting out i.e. to the salt precipitation over the metal surfaces they have detrimental corrosion effects on electrical connections within the air plane e.g. in the metal plates such as cadmium plated landing gear parts. In 2005 when, when one European airport switched from products based on urea and ethylene glycol to potassium formate based products, corrosion of zinc coated steel occurred on flight structures, as well as on maintenance and ground operation vehicles [ACRP Synthesis, Impact of Airport Pavement Deicing Products on Aircraft and Airfield Infrastructure, 7.1.2009, ISSN 1935-9187, ISBN 978-0-309-09799-4, 2008 Transportation Research Board].

Moreover, the synergistic generation of residue when aircraft anti-icing composition or fluid based on glycols is splattered with potassium formate or acetate runaway deicing fluid presents serious concerns about residue gel hydration and refreezing in flight and has produced potential dangerous rough residues on leading edge surfaces on aircraft. This can negatively affect in-flight handling of the aircraft if deposits occur on or near control surfaces or linkages. Initial research has shown that the thickener used in the aircraft deicer fluids will separate due to the contact with potassium formate or potassium acetate based runaway deicing fluids. [Hille, J., "Deicing and Anti-icing Fluid Residues," Boeing Aero Magazine, 1st quarter, 2007, pp. 15-21].

In spite of the environmental advantages over the formulae such as urea and glycols, alkali-metal-salt based runaway deicer compositions such as compositions based on potassium formate and potassium acetate present potential problems both in deicing airplanes or airfield infrastructures and also in using to heat transfer as well.

Heat storage chemicals are typically based on hydrated fluoride-, chloride-, sulfate-, and nitrate salts or salt combination. These salts are quite harmful to environment and corrosive especially to light metals such as aluminum and magnesium used in modern auto industry or heat storage plants (e.g. solar heating and electrical heating on low tariff hours) that are areas that can benefits from non corrosive heat storage chemicals.

Other prior art freezing point depressants, such as ethanol and methanol, have toxic effects and high volatility. They are also a cause of offensive smell and fire danger.

US patent 6,835,323 discloses an alkali metal, an alkaline-earth metal salt or an ammonium salt of formic acid for the device which hydrostatically transmit power. US patent 7,201,982 relates to a method for cooling an electrical system comprising circulating in a cooling system of the electrical system a mixture comprising a heat transfer fluid and one or more carboxylic acid salts thereof. The carboxylic aid is C₅-C₁₈ mono or di-carboxylic acid. The carboxylic acid salt (0.001 to 10 wt-%) is dissolved in a water soluble liquid alcohol freezing point depressant such as glycol (90 to 99 wt-%).

US patent 7,306,750 describes the application of one or a mixture of anhydrous salts, selected from the group consisting of the alkali metal salts, alkali-earth metals salts, amine salts and ammonium salts of C₃-C₁₈ mono or di-carboxylic acid for storing the thermal energy where in the temperature range of the thermal energy source is 20 to 180°C.

WO patent 2005/042662 discloses the process for producing a deicing/anti-icing fluid that produces monoalkyl esters of long chain fatty acids. The stream includes water, glycerol, and an alkali containing compounds.

US patent 2003/0015685 discloses low corrosive potassium acetate deicing and anti-icing compositions based on the use of C₃-C₁₆ aliphatic monobasic acid or the alkali metal, ammonium or amine salt of monobasic acid as a corrosion inhibitor. US patent 7,452,480 relates to carboxylate salts of amines that are used as components of heat exchange fluids. Fluid contains amine carboxylates, preferably triethanolamine formate from 15 to 80 wt-%, and potassium formate up to 50 wt-%.

Further deicing compositions are disclosed in US 2003/034478, WO 03/012001, US 2002/003223 while further hydraulic fluid compositions are disclosed in US 2010/016187.

It would be represent a notable advance in the state of art if one could develop a freezing point depressant which is environmentally benign, but in spite of that biostatic also, non-corrosive and practically immune to salting out and to precipitate formation.

The ideal freezing point depressant composition for airfield pavement deicing, aircraft deicing and anti-icing, heat storage and heat transfer, metal cutting, NOx removal and hydraulic fluid use:
- should be free of corrosive halides such as chlorides,
- should be free of alkali and alkali-earth metals such as potassium, sodium and calcium,
- should not form precipitates on metal surfaces,
- should have low toxicity,
- should have relatively low biological (BOD) and chemical oxygen demand (COD),
- should have reduced electrical conductivity, preferably below 200 mS/cm, most preferably below 100 mS/cm,
- should be inexpensive to obtain,
- and naturally should be effective at low temperatures, i.e. it should have low viscosity and low freezing point, as well as high specific heat capacity and thermal conductivity.

### GENERAL DESCRIPTION OF THE INVENTION

The present inventors have surprisingly found that a liquid or water-soluble organic ammonium carboxylate having the formula (1):

[NR¹R²R³R⁴]⁺ₙ[R⁵(COO)ₙ]⁻ⁿ, (1),

in which R¹ and R² are hydrogen, R³ is selected from the group comprising hydrogen and C₁-C₄-alkyls substituted with a hydroxyl group, R⁴ is a substituted alkyl containing 1-6 carbon atoms and substituted with a hydroxyl group, preferably a C₁-C₄-alkyl substituted with a hydroxyl group, R⁵ is hydrogen, a substituted or unsubstituted alkyl containing 1-6 carbon atoms, preferably a substituted or unsubstituted alkyl containing 1-4 carbon atoms, more preferably hydrogen, methyl or ethyl, and n is 1 or 2, preferably 1 and the viscosity of 0.1- 50, 000 mPas and the electrical conductivity in a range of 0.05-100 mS/cm preferably in a range of 1.0 -100 mS/cm, wherein alkali or alkali-earth metal content is kept in an amount of 0.001-1.0 wt-% are ideal freezing point depressant compositions which can be used for deicing or anti-icing with low corrosive properties.

Organic ammonium carboxylate stands for a salt or a complex formed of an ammonium cation and a carboxylic anion. Hence one or more ammonium ions of the salt or complex may be primary (RNH₃⁺) or secondary (R₂NH₂⁺). The carboxylate ion of the salt or complex may be monovalent (RCOO⁻) or divalent and in that case it may also comprise unneutralised carboxyl groups (-COOH).

Group R⁵ in formula (1) is hydrogen, substituted alkyl containing 1-6 carbon atoms or unsubstituted alkyl containing 1-6 carbon atoms, more advantageously hydrogen, and substituted alkyl containing 1-4 carbon atoms or unsubstituted alkyl containing 1-4 carbon atoms. The terms "substituted" and "unsubstituted" refer basically to groups containing heteroatoms. Preferable these groups contain as a heteroatom oxygen or nitrogen (e.g. -OH, -NH₂, -COOH).

Since the group R⁵ is associated with a carboxylate group, the ammonium carboxylate of formula (1) is preferably based on a lower organic carboxylic acid and it can be prepared from such an acid or its salt. Lower organic acids include lower fatty acids such as formic acid, acetic acid, propionic acid, n- and i-butyric acid, and n- and i-pentanic acid. Useful acids also include benzoic acid and oxycarboxylic acids such as glycolic acid and lactic acid. Lower dicarboxylic acids such as oxalic acid, malonic acid, succinic acid and glutaric acid are also applicable.

Group R⁵ of formula (1) is most advantageously hydrogen, methyl or ethyl. In formula (1), n is 1 or 2, most advantageously 1. Consequently, the most advantageous organic ammonium carboxylate used in the method of the invention is based on lower fatty acids.

In formula (1), R¹ and R² are hydrogen, R³ has been selected from the group comprising hydrogen and C₁-C₄-alkyls substituted with a hydroxyl group. R₄ is a C₁-C₆-alkyl substituted with a hydroxyl group, most advantageously a C₁-C₄-alkyl substituted with a hydroxyl group.

Organic ammonium carboxylates formed of lower alkanolamines are hence particularly useful. Among lower alkanolamines we may cite monoethanolamine, diethanolamine, monoisopropanolamine, di-isopropanolamine, mono-sek-butanolamine, di-sek-butanolamine. Additional information about useful alkanolamines can be found in the book Kirk-Othmer, Encyclopedia of Chemical Technology 3rd Ed., Vol. 1, p. 944.

It is particularly recommendable that R¹ and R² are hydrogen and R³ is selected from the group comprising of hydrogen and ethyl substituted with a hydroxyl group, preferably from the group comprising of hydrogen and 2-hydroxy ethyl, and R₄ is ethyl substituted with a hydroxyl group, preferably 2-hydroxy ethyl. Consequently, the ammonium carboxylate in accordance with the invention is preferably based on ordinary mono or diethanolamine. In the most advantageous embodiment, the organic ammonium carboxylate of formula (I) is selected from the group comprising of a salt or a complex of formic acid and/or lactic acid and monoethanolamine.

In the practice, ammonium carboxylate of formula (1) is prepared e.g. by mixing an ammonium cation source and a carboxyl anion source in the desired molar ratio, either without a medium or by using an appropriate solvent such as water as a medium. When the starting materials are an amine and an acid, they are simply mixed during gentle heating, if necessary. When the starting materials consist of salts, they are typically dissolved separately in water, and then the solutions are combined. If a salt or a complex thus formed is hydrophobic, it will separate from the water phase as an unctuous or paste-like deposit or a wax-like precipitate, and it can be separated from the water phase by any known methods. When both the starting materials and the formed product are hydrophobic, the preparation can be carried out in an organic solvent instead of water. The freezing point depressant composition used in the invention comprises either fluid composing of ammonium carboxylate of formula (1) without solvent or ammonium carboxylate of formula (1) with appropriate solvent. Preferably solvent is an aqueous solution or a dispersion. Chemical stability: Preliminary results indicate that for instance a fluid pair: ethylene amide - formic acid could under special circumstances react and form amid when no solvent is present. Increasing the temperature favours amid formation. Nearly no esters are formed.

The organic ammonium carboxylates of formula (1) as well as compositions and fluids obtained from these carboxylates protect wood material against micro-organisms. We refer here for PCT FI20006-00007 for Granula ltd, where we have demonstrated efficiency of ammonium carboxylates of formula (I) against micro-organisms including several fungi.

The composition with low corrosive effect and low freezing point is prepared by mixing an ammonium cation source with a carboxyl anion source in an appropriate molar or weight ratio, either without a medium or by using an appropriate medium for obtaining liquid or water-soluble organic ammonium carboxylate of formula (1) according to claim 1 and thereafter adding possible solvent and at the same time keeping alkali or alkali-earth metal content of the composition in a range of 0.001-1.0 wt-% and halide content in a range of 0.001-1 wt-% most preferably in a range of 0.001-0.1 wt-%.

The used compositions have low freezing point, low corrosivity, high bacterial resistance and they are environmentally benign and safe to use.

The used freezing point depressant compositions are typically in the form of an aqueous solution or dispersion containing 0.5-100% by weight of the ammonium carboxylate of formula (1), more advantageously 5-70% by weight.

The fluid solutions in water could possess many of the desired properties. For example no ready made emulsions would be needed.

The freezing point depressant composition containing ammonium carboxylate of formula (1) either without a medium or by using an appropriate solvent together with auxiliary substances and possible compatible carboxylates are selected so, that the composition:
- has a low freezing point themselves and will also lower freezing point of an aqueous system in intended application,
- includes alkali or alkali-earth metals in amount of 0.001-1.0 wt-% and
- may include halides in amount of 0.001-1 wt-% most preferably 0.001-0.1 wt-% and further
- compositions for deicing or anti-icing applications should have viscosity of 0.1-10,000 mpas and electrical conductivity of 1.0-100 mS/cm,

Because metal corrosion is an electrochemical process, fluids of high conductivity may facilitate corrosion more than low conductivity fluids, and they can have additional detrimental effects on electrical connections within the light fixtures themselves. All compositions used in the invention have a low electrical conductivity (under 100 mS/cm) which lowers their corrosive influence. The low electrical conductivity (below 100 mS/cm) and the lack of halides, alkali and alkali-earth metals makes the fluid non corrosive and immune to precipitate formation. To further facilitative anti-corrosive properties of the composition comprising fluid according to formula (I) and possible solvent, it may be advantageous to strip oxygen from composition by flowing gas (for example nitrogen) through the liquid composition.

Preferably compositions do not contain environmentally questionable chemicals such as oils and are safe to handle also.

The freezing point depressant composition intended for deicing or anti-icing applications, contains preferably 40-60% by weight of ammonium carboxylate of formula (1), most preferably 45-55% by weight. When using a composition for these applications the good properties would be anti freezing, appropriate heat capacity and heat transfer properties, environmental friendliness, anti microbial activity, anti corrosion activity, low evaporation, etc. Some amid formation in the fluid formulation could be an advantage. Compared with other products no solid crystals are formed (here we refer for instance fluid ethylene amine - formic acid presented in table 2 below) no corrosion of carbon fibre brakes, environmental friendliness, economical and good properties against many micro-organisms (see above). One advantageous method of using composition targeted for de-icing surfaces is to heat compositions prior use. Compositions can be heated by using conventional liquid-heating-techniques or by pressing the composition through a microwave nozzle. A suitable composition for this kind of use may be the fluid according to formula I mixed with solvent comprising 1,3-propane diol. One important anti icing application is the prevention of ice formation onto an aircraft wings and onto an airstrip. Specially for anti icing of aircraft wings the composition should have suitable viscosity and surface tension. Viscosity should on the one hand be so high that it will prevent removal of composition from wings and on the other hand the surface tension should be such, that there is no bubble-formation from composition. One can vary the viscosity and surface tension of the freezing point depressant composition considerably, as can be seen example from tables 1 -4, by using different quantities of solvent and by choosing appropriate fluid.

The freezing point depressant composition is compatible with alkali metal, an alkali- earth metal or an ammonium salts of C₁-C₆ monocarboxylic acids or carboxylates of urea or ethylene glycol or propylene glycol, or glycerol or a mixture thereof and we include in the invention the combinations of the ammonium carboxylate of formula (1) with alkali metal, an alkaline earth metal or an ammonium salts of C₁-C₆ monocarboxylic acids or urea or ethylene glycol or propylene glycol, or glycerol or a mixture thereof carboxylates. By using freezing point depressant composition with urea for de-icing or anti icing applications one can lower oxygen demand on the environment or at the sewage treatment plant.

The freezing point depressant compositions containing ammonium carboxylate of formula (1) may contain auxiliary substances as well. Typical auxiliary substances comprise such as additional corrosion inhibitors, biocides, coloring agents, surfactants, and viscosity intensifiers.

Fluids prepared according to the method of the invention can also be substitutes for glycol ethers. Glycol ethers are a group of solvents based on alkyl ethers of ethylene glycol. Glycol ethers are commonly used in paints. These solvents typically have high boiling point, together with the favourable solvent properties of lower molecular weight ethers. Glycol ethers can be also derived of diethylene glycol. Acetates of glycols are a similar kind of potent solvents. Overexposure to glycol ethers can cause anemia (a shortage of red blood cells), intoxication similar to the effects of alcohol, and irritation of the eyes, nose, or skin. In laboratory animals, low-level exposure to certain glycol ethers can cause birth defects and can damage a male's sperm and testicles. By binding glycol ethers, fluids according to invention can be used in many application which require freezing point depression and at the same time also binding hazardous glycol ethers from environment. One important aspect of the freezing point depressant composition is its reuse. The reuse of freezing point depressant composition is possible especially when recovered from targets where this composition has been used as anti-icing or de-icing fluid or solution for melting ice away or preventing ice formation. This kind of application is for example anti-icing of wings, but also from other applications freezing point depressant can be recovered either in pure form or with some additional material such as dirt (for example when de-icing or anti-icing of an airstrip). By purifying and reprocessing composition it can be reused in number of applications. Also without purifying the composition may be reused if it is collected as substantially pure or if the reuse target is such, that it do not require using pure composition.

### DESCRIPTION OF PREFERRED EMBODIMENTS OF THE INVENTION

The invention is described below in greater details with the help of examples. Person skilled in the art will recognize that the properties of the compositions studied are such that they will make ideal freezing point depressant fluid for application such as airfield pavement deicing, aircraft deicing and anti-icing.

In the following non-restricting examples we have presented some specific applications and properties of compositions (fluids and diluted solutions) as well as method(s) for preparation of these compositions (products). These examples are in no way intended to limit the compositions or their use.

### Example 1

A deicing and an anti-icing fluid were prepared by mixing 1 mole of formic acid (99%) with 1 mole of monoethanolamine (99%). Distilled water was added to the fluid mixture in order to made 60% by weight solution in water.

The freezing point of the solution was below -20°C, the electrical conductivity of the fluid was 61 mS/cm at 26°C, and pH of the fluid was 7.55 (measured directly from the solution).

### Example 2

A fluid was prepared by mixing 1 mole of formic acid (99%) with 1 mole of monoethanolamine (99%). Distilled water was added to the fluid mixture in order to made 40% by weight solution in water.

The freezing point of the solution was below -20°C, the Brookfield DV-I viscosity (20 rpm) was 10 mPas at -20°C, 10 mPas at -10°C, 10 mPas at 0°C, and Bohlin VOR viscosity (shear rate 23.1 1/s) was 4 mPas at 10°C, 3 mPas at 20°C, 2 mPas at 40°C, and 1.5 mPas at 60°C. The electrical conductivity of the fluid was 65 mS/cm at 26°C, and pH of the fluid was 7.54 (measured directly from the solution).

### Example 3

A fluid was prepared by mixing 1 mole of acetic acid (99%) with 1 mole of monoethanolamine (99%). Distilled water was added to the fluid mixture in order to made 60% by weight solution in water.

The freezing point of the solution was below -20°C, the Brookfield DV-I viscosity (20 rpm) was 80 mPas at -20°C, 60 mPas at -10°C, 40 mPas at 0°C, and Bohlin VOR viscosity (shear rate 23.1 1/s) was 23 mPas at 10°C, 15 mPas at 20°C, 8 mPas at 40°C, and 5 mPas at 60°C. The electrical conductivity of the fluid was 25.9 mS/cm at 26°C, and pH of the fluid was 7.34 (measured directly from the solution).

### Example 4

A fluid was prepared by mixing 1 mole of lactic acid (99%) with 1 mole of monoethanolamine (99%). Distilled water was added to the fluid mixture in order to made 90% by weight solution in water.

The freezing point of the solution was below -20°C, the Brookfield DV-I viscosity (20 rpm) was 4000 mPas at -20°C, 2050 mPas at -10°C, 1970 mPas at 0°C, and Bohlin VOR viscosity (shear rate 23.1 1/s) was 511 mPas at 10°C, 250 mPas at 20°C, 73 mPas at 40°C, and 30 mPas at 60°C. The electrical conductivity of the fluid was 2.31 mS/cm at 23°C, and pH of the solution was 8.6 (measured directly from the solution).

Fluids and solutions in examples 6-23 have been made in the same way as presented in examples 1-4, that is, by mixing 1 mole of an ammonium cation source and 1 mole of a carboxyl anion source (unless otherwise shown) together for obtaining a concentrated fluid and then adding distilled water to the concentrated fluid, for obtaining diluted solutions.

**Table 1**

| In table 1 has been shown formation of possible precipitates from fluids and diluted solutions obtained from fluids. Temperature was 20-25 °C. | | | | | | | | | |
|---|---|---|---|---|---|---|---|---|---|
| | fluid Wt-% from solution | 100 | 90 | 80 | 60 | 40 | 20 | 5 | |
| | | | | | | | | | pH of 2% solution |
| Code/ex | fluid | | | | | | | | |
| EAE/6 | ethanolamine / acetic acid | Clear | Clear | Clear | Clear | Clear | Clear | Clear | 6.8 |
| EAMa/7 | ethanolamine / lactic acid | Clear | Clear | Clear | Clear | Clear | Clear | Clear | |
| EAM/8 | ethanolamine / formic acid | Clear | Clear | Clear | Clear | Clear | Clear | Clear | 3.7 |
| EAP/9 | ethanolamine / propionic acid | Clear | Clear | Clear | Clear | Clear | Clear | Clear | 7.1 |
| EAOx/10 | ethanolamine / oxalic acid | White hard powder | | 30% clear * | 30% clear | 30% clear | Clear | Clear | 8.2 |
| EAF/11 | ethanolamine / H₃PO₄ (85%) | White powder | | 70% dissolved | Clear, dissolved | | | | 9.2 |
| | | | | | | | | | |
| EAGLIC-A/12 | ethanolamine / glycolic acid | | | | | | | | |
| EAGLIC-B/13 | ethanolamine / glycolic acid** | | | | | | | | |
| EAGNIC-A/14 | ethanolamine / glyconic acid | | | | | | | | |
| EAGNIC-B/15 | ethanolamine / glyconic acid** | | | | | | | | |
| EDAE/16 | ethylenediamine / acetic acid | Hard presicipate | Hard presicipate | Clear | Clear | Clear | Clear | Clear | 7.8 |
| EDA-Ma/17 | ethylenediamine / lactic acid | Clear | Clear | Clear | Clear | Clear | Clear | Clear | 6.5 |
| EDAM/18 | ethylenediamine / formic acid | Presicipate | Presicipate | Clear | Clear | Clear | Clear | Clear | 6.1 |
| EDAP/19 | ethylenediamine / propionic acid | Hard, crystalline | not done | Precisipate | Clear | Clear | Clear | Clear | 8.1 |
| | | | | | | | | | |
| TEAE/20 | triethanolamine / acetic acid | Clear | slight turbidity | slight turbidity | slight turbidity | slight turbidity | slight turbidity | slight turbidity | 6.33 |
| TEA-Ma/21 | triathanolamine / lactic acid | Clear | Clear | Clear | Clear | Clear | Clear | Clear | 7.2 |
| TEAM/22 | triethanolamine / formic acid | Hard, crystalline | slight turbidity | slight turbidity | slight turbidity | slight turbidity | slight turbidity | slight turbidity | 6.2 |
| TEAP/23 | triethanolamine / propionic acid | Clear | Clear | Clear | slight turbidity | slight turbidity | slight turbidity | slight turbidity | 6.6 |

| | | | | | | | | | |
|---|---|---|---|---|---|---|---|---|---|
| * some crystallines after 1 month storage ** mixing 1 mole of cation source and 2 mole of anion source for obtaining concentrated fluid | | | | | | | | | |

**Table 2**

| The fluid and solution samples from examples 6-23 were subjected to chilling to a temperature of +4 °C and then to further cooling to a temperature of -20 °C. In these temperatures the possible turbidity, precisipation of these samples was observed. | | | | | | | | |
|---|---|---|---|---|---|---|---|---|
| | Temperature +4 C | 100 | 90 | 80 | 60 | 40 | 20 | 5 |
| ex | | | | | | | | |
| 6 | ethanolamine / acetic acid | Clear | Clear | Clear | Clear | Clear | Clear | Clear |
| 7 | ethanolamine / lactic acid | Clear | Clear | Clear | Clear | Clear | Clear | Clear |
| 8 | ethanolamine / formic acid | Clear | Clear | Clear | Clear | Clear | Clear | Clear |
| 9 | ethanolamine / propionic acid | Clear | Clear | Clear | Clear | Clear | Clear | Clear |
| 10 | ethanolamine / oxalic acid | | | as 30% solution precipitate | | | Clear | Clear |
| 11 | ethanolamine / H3PO4 85% | | | | | | | |
| 12 | ethanolamine / glycolic acid | | | | | | | |
| 13 | ethanolamine / glycolic acid ** | | | | | | | |
| 14 | ethanolamine / glyconic acid | Clear | Clear | Clear | Clear | Clear | Clear | Clear |
| 15 | ethanolamine / glyconic acid** | Clear | Clear | Clear | Clear | Clear | Clear | Clear |
| 16 | ethylenediamine / acetic acid | ********* | 1/1 precipitate | ½ precipitate | Clear | Clear | Clear | Clear |
| 17 | ethylenediamine / lactic acid | Clear | Clear | Clear | Clear | Clear | Clear | Clear |
| 18 | ethylenediamine / formic acid | ********* | precipitate | Clear | Clear | Clear | Clear | Clear |
| 19 | ethylenediamine / propionic acid | ********* | ******** | ******* | precipitate | Clear | Clear | Clear |
| 20 | triethanolamine / acetic acid | 1/1 precipitate | Clear | Clear | Clear | Clear | Clear | Clear |
| 21 | triathanolamine / lactic acid | Clear | Clear | Clear | Clear | Clear | Clear | Clear |
| 22 | triethanolamine / formic acid | ********* | Hard | Clear | Clear | Clear | Clear | Clear |
| 23 | triethanolamine / propionic acid | Clear | Clear | Clear | turbidity | turbidity | turbidity | turbidity |
| | Temperature -20°C | 100 | 90 | 80 | 60 | 40 | 20 | 5 |

| ex | | | | | | | | |
|---|---|---|---|---|---|---|---|---|
| 6 | ethanolamine / acetic acid | Clear/ liquid state | Clear/ liquid state | Clear/ liquid state | Clear/ liquid state | Clear/ liquid state | frozen | frozen |
| 7 | ethanolamine / lactic acid | Clear/ liquid state | Clear/ liquid state | Clear/ liquid state | Clear/ iquid state | frozen | frozen | frozen |
| 8 | ethanolamine / formic acid | Clear/ liquid state | Clear/ liquid state | Clear/ liquid state | Clear/ liquid state | frozen | frozen | frozen |
| 9 | ethanolamine / propionic acid | Clear/ liquid state | Clear/ liquid state | Clear/ liquid state | Clear/ liquid state | Clear/ liquid state | frozen | frozen |
| 10 | ethanolamine / oxalic acid | | | | | | | |
| 11 | ethanolamine / H3PO4 85% | | | | | | | |
| 12 | ethanolamine / glycolic acid | | | | | | | |
| 13 | ethanolamine / glycolic acid** | | | | | | | |
| 14 | ethanolamine / glyconic acid | Clear/ liquid | | frozen not hard | | | | |
| 15 | ethanolamine / glyconic acid** | almost frozen | | frozen hard | | | | |
| 16 | ethylenediamine / acetic acid | | | | | | | |
| 17 | ethylenediamine / lactic acid | Clear/ liquid state | | | | frozen | frozen | frozen |
| 18 | ethylenediamine / formic acid | ******* | Precipitate | Clear/ liquid state | | frozen | frozen | frozen |
| 19 | ethylenediamine / propionic acid | ******* | ******** | ******** | precipitate | frozen | frozen | frozen |
| | | | | | | 30% frozen | frozen | frozen |
| 20 | triethanolamine / acetic acid | Hard | Hard | Clear/liquid | Clear/liquid state | frozen | frozen | frozen |
| 21 | triathanolamine / lactic acid | Clear/ liquid state | Clear/ liquid state | Clear/ liquid state | Clear/ liquid state | frozen | frozen | frozen |
| 22 | triethanolamine / formic acid | ******** | Hard | Clear/ liquid state | Clear/ liquid state | frozen | frozen | frozen |
| 23 | triethanolamine / propionic acid | specific crystals | Hard | Liquid state | Liquid | frozen | frozen | frozen |

| | | | | | | | | |
|---|---|---|---|---|---|---|---|---|
| ** 1 mole of cation source and 2 mole of anion source | | | | | | | | |

**Table 3**

| In table 3 is shown electrical conductivity, surface tension and pH of fluid and solution samples for fluids and solutions of examples 6-23. | | | | | | | | | |
|---|---|---|---|---|---|---|---|---|---|
| | diluted with water wt-% fluid from solution | **100** | **90** | **80** | **60** | **40** | **20** | **5** | |
| Fluid | | | | | | | | | pH 2%-solution |
| ethanolamine / acetic acid | Electrical conductivity mS/cm | 0.534 | 2.24 | 7.1 | 25.9 | 46.9 | 47.8 | 20.2 | 6.8 |
| | T°C | 25.4 | 25.9 | 26 | 25.6 | 25.4 | 25.1 | 24.9 | |
| | pH | 8.0 | 7.8 | 7.7 | 7.3 | 7.1 | 6.9 | 6.8 | |
| | surface tension dyn/cm | 52.0 | 56.0 | | | 52.0 | | 65.0 | |
| ethanolamine / lactic acid | Electrical conductivity mS/cm | 0.541 | 2.31 | 5.91 | 17.8 | 29.7 | 28.5 | 11.69 | 7.6 |
| | T°C | 22.7 | 22.5 | 22.4 | 22.2 | 22.1 | 22.1 | 22 | |
| | pH | 8.8 | 8.6 | 8.6 | 8.6 | 8.6 | 8.7 | 8.7 | |
| surface tension | dyn/cm | 56.0 | 58.0 | 59.0 | 59.0 | 57.0 | 51.0 | 60.1 | |
| ethanolamine / formic acid | Electrical conductivity mS/cm | 15.9 | 27.3 | 40.4 | 61 | 65 | 46.9 | 16 | 3.7 |
| | T°C | 26.1 | 25.9 | 25.8 | 25.6 | 25.5 | 25.5 | 25.8 | |
| | pH | 4.0 | 3.9 | 3.8 | 3.6 | 3.5 | 3.4 | 3.5 | |
| surface tension | dyn/cm | 67.0 | 69.0 | 68.0 | 64.0 | 51.0 | 48.0 | 56.0 | |
| ethanolamine / propionic acid | Electrical conductivity mS/cm | 0.378 | 1.98 | 5.42 | 18.4 | 33.4 | 35.6 | 15.9 | 7.1 |
| | T°C | 24.3 | 23.9 | 23.9 | 23.5 | 23.4 | 23.2 | 23.2 | |
| | pH | 8.4 | 8.2 | 8.0 | 7.7 | 7.4 | 7.2 | 7.1 | |
| surface tension | dyn/cm | hardened | 43.0 | | 51.0 | | 56.0 | 55.1 | |
| ethanolamine / oxalic acid | Electrical conductivity mS/cm | | | | | 30% 69.8 | 63.6 | 22.5 | 8.2 |
| | T °C | | | | | 24.5 | 25 | 25 | |
| | pH | | | | | 8.5 | 8.5 | 8.2 | |
| surface tension | dyn/cm | | | | | | | | |
| ethanolamine / H3PO4 85% | Electrical conductivity mS/cm | | | | | | | | 8.2 |
| | T °C | | | | | | | | |
| | pH | | | | | | | | |
| surface tension | dyn/cm | | | | | | | | |
| ethanolamine / glycolic acid | Electrical conductivity mS/cm | | | | | | | | |
| | T °C | | | | | | | | |
| | pH | 9.9 | | | | | | | |
| ethanolamine / glycolic acid** | Electrical conductivity mS/cm | | | | | | | | |
| | T °C | | | | | | | | |
| | pH | 4.7 | 4.5 | 4.4 | | | | | |
| ethanolamine / glyconic acid | Electrical conductivity mS/cm | | | | | | | | |
| | T °C | | | | | | | | |
| | pH | 10.3 | 10.3 | 10.3 | | | | | |
| ethanolamine / glyconic acid** | Electrical conductivity mS/cm | | | | | | | | |
| | T °C | | | | | | | | |
| | pH | 8.7 | 8.5 | 8.6 | | | | | |
| ethylenediamine / acetic acid | Electrical conductivity mS/cm | HARD | 2.84 | 5.66 | 15.6 | 25.2 | 23.8 | 9.61 | 7.8 |
| | T °C | | 26.9 | 26.8 | 26.6 | 26.6 | 26.2 | 26.2 | |
| | pH | | 8.5 | 8.4 | 8.2 | 8.2 | 8.1 | 8.0 | |
| surface tension | dyn/cm | crystalline | crystalline | crystalline | 58.0 | 43.0 | | 48.0 | |
| ethylenediamine / lactic acid | Electrical conductivity mS/cm | 0.218 | 1.246 | 4.77 | 19.9 | 37.3 | 38 | 16 | 6.5 |
| | T °C | 25.1 | 25.7 | 24.7 | 24.7 | 24.4 | 24.2 | 24.2 | |
| | pH | 8.0 | 7.9 | 7.7 | 7.5 | 7.4 | 7.3 | 7.0 | |
| surface tension | dyn/cm | 60.0 | | 62.0 | | | 58.0 | 61.0 | |
| ethylenediamine / formic acid | Electrical conductivity mS/cm | solid * | 18.6 | 30.4 | 50.3 | 55.9 | 40.7 | 13.7 | 6.1 |
| | T °C | | 23 | 22.8 | 22.7 | 22.6 | 22.5 | 22.5 | |
| | pH | 7.2 | 7.0 | 6.9 | 6.6 | 6.5 | 6.4 | 6.2 | |
| surface tension | dyn/cm | | | 57.0 | 52.0 | | 65.0 | 47.0 | |
| ethylenediamine / propionic acid | Electrical conductivity mS/cm | solid | ei lam. | 5.15 | 11.9 | 19.1 | 19.1 | 8.53 | 8.1 |
| | T °C | | | 25.8 | 25.8 | 25.6 | 25.5 | 25.8 | |
| | pH | | | 8.5 | 8.3 | 8.2 | 8.1 | 8.1 | |
| surface tension | dyn/cm | crystalline | crystalline | crystalline | crystalline | 46.0 | 49.0 | 45.0 | |
| triethanolamine / acetic acid | Electrical conductivity mS/cm | 0.158 | 0.935 | 5.45 | 12.08 | 23.7 | 24.6 | 10.36 | 6.33 |
| | T °C | 26.5 | 26.1 | 25.9 | 25.8 | 25.6 | 25.7 | 25.5 | |
| | pH | 6.9 | 6.8 | 6.7 | 6.6 | 6.6 | 6.5 | 6.5 | |
| surface tension | dyn/cm | 47.0 | | 36.0 | | | 34.0 | 45.0 | |
| triathanolamine / lactic acid | Electrical conductivity mS/cm | 0.207 | 0.934 | 3.46 | 10.16 | 17.4 | 17.1 | 6.73 | 7.2 |
| | T °C | 25.1 | 25.2 | 24.8 | 25 | 24.9 | 24.9 | 214.8 | |
| | pH | 7.3 | 7.2 | 7.2 | 7.2 | 7.2 | 7.2 | 7.2 | |
| surface tension | dyn/cm | | | | | | | | |
| triethanolamine / formic acid | Electrical conductivity mS/cm | Hard, crystalline | 2.54 | 7.05 | 31.5 | 40.7 | 36.4 | 14.2 | 6.2 |
| | T °C | | 24.7 | 24.6 | 24.5 | 24.7 | 24.5 | 24.5 | |
| | pH | | 6.2 | 6.2 | 6.2 | 6.0 | 6.2 | 6.0 | |
| surface tension | dyn/cm | | | | | | | | |
| triethanolamine / propionic acid | Electrical conductivity mS/cm | 0.24 | 0.868 | 2.25 | 6.52 | 17.6 | 19.4 | 8.53 | |
| | T °C | 24.7 | 24.6 | 24.6 | 24.5 | 24.4 | 24.3 | 24.3 | |
| | pH | 7.2 | 7.2 | 7.0 | 6.8 | 6.7 | 6.6 | 6.6 | |
| surface tension | dyn/cm | 42.0 | | 40.0 | | | 35.0 | | |

| | | | | | | | | | |
|---|---|---|---|---|---|---|---|---|---|
| * liquide state +60 °C ** 1 mole of cation source and 2 mole of anion source | | | | | | | | | |

As can be seen from tables 1-3 fluids and diluted solutions down to 60 wt-% were almost all solutions in liquid state in -20 °C and thus have lowered freezing point compared to distilled water. These fluids and solutions have also low electrical conductivity (01-65 mS/cm). As can be seen from table 2 these fluids and diluted solutions thereof are nor prone for precipitating. Since the elec-trical conductivity is low for compositions according to examples 1-23 and they are not prone to precipitate these compositions will not cause a corrosive environment.

**Table 4**

| In table 4 has been given results from viscosity measurements compositions of examples 6-23. Viscosity was measured with Bohlin method (bold numbers) at shear rate 23.1 1/s and with Brookfield method (normal numbers) at shear rate 20 rpm. Additionally electrical conductivity, ph and redox potential was measured for these compositions comprising fluids and solutions prepared from these fluids by adding distilled water. | | | | | | | | |
|---|---|---|---|---|---|---|---|---|
| monoethanolamine / acetic acid | fluid Wt-% from solution | 100 | 90 | 80 | 60 | 40 | 20 | 5 |
| water | water wt-% | 0 | 10 | 20 | 40 | 60 | 80 | 95 |

| | **°C** | **VISCOSITY mPas** | | | ***Bohlin VOR viscosity*** | | ***shear rate 23.1 1*/*s*** | |
|---|---|---|---|---|---|---|---|---|
| | | | | | Brookfield DV-I viscosity | | 20 rpm sp3 | |
| viscosity mPas / | -20 (repeat) | >20000 | >20000 | 12450 | 170 | 35 | X | X |
| | -20 | >20000 | 16740 | 1700 | 80 | 20 | X | X |
| | -10 | >20000 | 5150 | 700 | 60 | 15 | 10 | 5 |
| | 0 | 27850 | 2160 | 330 | 40 | 10 | 10 | 5 |
| | 10 | ***15250*** | ***1152*** | ***210*** | ***23*** | ***6*** | ***2*** | ***1.7*** |
| | 20 | ***5665*** | ***556*** | ***118*** | ***15*** | ***5*** | ***2*** | ***1.3*** |
| | 40 | ***1220*** | ***154*** | ***41*** | ***8*** | ***3*** | ***1.5*** | ***1.1*** |
| | 60 | ***345*** | ***63*** | ***20*** | ***5*** | ***2*** | ***1*** | ***0.7*** |
| conductivity mS/cm | | 0.534 | 2.24 | 7.1 | 25.9 | 46.9 | 47.8 | 20.2 |
| T °C | | 25.4 | 25.9 | 26 | 25.6 | 25.4 | 25.1 | 24.9 |
| pH °C 22 | | 7.96 | 7.81 | 7.68 | 7.34 | 7.07 | 6.87 | 6.79 |
| REDOX | | +31 | +54 | +69 | +107 | +146 | +179 | +216 |
| Composition: monoethanolamine / formic acid | fluid Wt-% from solution | 100 | 90 | 80 | 60 | 40 | 20 | 5 |
| water | water wt-% | 0 | 10 | 20 | 40 | 60 | 80 | 95 |

| | pale oily light liquid | | | | | | | |
|---|---|---|---|---|---|---|---|---|
| | **°C** | **VISCOSITY mPas** | | | ***Bohlin VOR viscosity*** | | ***shear rate 23.1 1*/*s*** | |
| | | | | | Brookfield DV-I viscosity | | 20 rpm sp3 | |
| viscosity mPas / | -30 | | | | | | | |
| | -20 | 4350 | 680 | 230 | 30 | 10 | X | X |
| | -10 | 2830 | 410 | 130 | 20 | 10 | 5 | X |
| | 0 | 1335 | 240 | 75 | 15 | 10 | 5 | 5 |
| | 10 | ***646*** | ***123*** | ***41*** | ***9*** | ***4*** | ***2*** | ***1.5*** |
| | 20 | ***325*** | ***72*** | ***26*** | ***6*** | ***3*** | ***1.7*** | ***1.2*** |
| | 40 | ***119*** | ***31*** | ***13*** | ***4*** | ***2*** | ***1.2*** | ***0.95*** |
| | 60 | ***47*** | ***17*** | ***7*** | ***3*** | ***1.5*** | ***1.1*** | ***0.9*** |
| conductivity mS /cm | | 15.9 | 27.3 | 40.4 | 61 | 65 | 46.9 | 16 |
| T °C | | 26.1 | 25.9 | 25.8 | 25.6 | 25.5 | 25.5 | 25.8 |
| pH /22°C | | 7.75 | 7.67 | 7.6 | 7.55 | 7.54 | 7.53 | 7.51 |
| REDOX potential | | -321 | -244 | -164 | -110 | -75 | -48 | +4 |
| Composition: monoethanolamine / lactic acid | | 100 | 90 | 80 | 60 | 40 | 20 | 5 |
| water | | 0 | 10 | 20 | 40 | 60 | 80 | 95 |

| | **°C** | **VISCOSITY mPas** | | | ***Bohlin VOR viscosity*** | | ***shear rate 23.1 1*/*s*** | |
|---|---|---|---|---|---|---|---|---|
| | | | | | Brookfield DV-I viscosity | | 20 rpm sp3 | |
| viscosity mPas / | -30 | | | | | | | |
| | -20 | >20000 | 4000 | | | | | |
| | -10 | 24000 | 2050 | | | | | |
| | 0 | 15600 | 1970 | 470 | 60 | 20 | 12 | |
| | 10 | ***4675*** | ***511*** | ***126*** | ***18.8*** | ***5.5*** | ***2.5*** | ***1.7*** |
| | 20 | ***1930*** | ***250*** | ***67*** | ***12.5*** | **4** | ***2*** | ***1.3*** |
| | 40 | ***420*** | ***73*** | ***25*** | ***7.1*** | ***2.4*** | ***1.4*** | ***1*** |
| | 60 | ***150*** | ***30*** | ***13*** | ***3.5*** | ***1.6*** | ***0.8*** | ***0.8*** |
| conductivity mS/cm | | 0.541 | 2.31 | 5.91 | 17.8 | 29.7 | 28.5 | 11.69 |
| T °C | | 22.7 | 22.5 | 22.4 | 22.2 | 22.1 | 22.1 | 22 |
| pH °C 22 | | 8.75 | 8.6 | 8.59 | 8.59 | 8.56 | 8.65 | 8.66 |
| REDOX | | -31 | -20 | +9 | +33 | +50 | +70 | +103 |
| Composition: Monoethanolamine / propionic acid | | 100 | 90 | 80 | 60 | 40 | 20 | 5 |
| water | | 0 | 10 | 20 | 40 | 60 | 80 | 95 |
| solid wax-like/crystalline | | | | | | | | |

| | **°C** | **EAP1-7 VISCOSIT Y mPas** | | | ***Bohlin VOR vis-cosity*** | | ***shear rate 23.1 1*/*s*** | |
|---|---|---|---|---|---|---|---|---|
| | | | | | Brookfield DV-I viscosity | | 20 rpm sp3 | |
| viscosity mPas / | -30 | | | | | | | |
| | -20 | >200000 | 15200 | 2600 | 190 | 60 | X | X |
| | -10 | | | | | | | |
| | 0 | | | | | | | |
| | 10 | ***6675*** | ***660*** | ***163*** | ***24*** | **7** | ***3*** | ***1.6*** |
| | 20 | ***2880*** | ***334*** | ***92*** | ***16*** | ***5*** | ***2.2*** | ***1.1*** |
| | 40 | ***725*** | ***108*** | ***37*** | ***8*** | ***3*** | ***1.4*** | ***0.9*** |
| | 60 | ***260*** | ***46*** | ***19*** | ***5*** | ***2*** | ***1.1*** | ***0.7*** |
| | | | | | | | | |
| conductivity mS /cm | | 0.378 | 1.98 | 5.42 | 18.4 | 33.4 | 35.6 | 15.9 |
| T °C | | 24.3 | 23.9 | 23.9 | 23.5 | 23.4 | 23.2 | 23.2 |
| | | | | | | | | |
| pH °C 24 | | 8.38 | 8.18 | 8.02 | 7.69 | 7.43 | 7.23 | 7.09 |
| REDOX | | hard | -21 | -1 | +50 | +96 | +128 | +175 |
| Composition: Monoethanolamine / glycolic acid | | **100** | **90** | **80** | **60** | **40** | **20** | **5** |
| water | | **0** | **10** | **20** | **40** | **60** | **80** | **95** |
| light yellow clear liquid | | | | | | | | |

| | °C | **VISCOSITY mPas** | | | **Bohlin VOR viscosity** | | **shear rate 23.1 1/s** | |
|---|---|---|---|---|---|---|---|---|
| | | | | | Brookfield DV-I viscosity | | | |
| viscosity mPas / | -30 | | | | | | | |
| | -20 | | | | | | | |
| | -10 | | | | | | | |
| | 0 | | | | | | | |
| | 10 | **277** | | | | | | |
| | 20 | 140 | | | | | | |
| | 40 | 48 | | | | | | |
| | 60 | 22 | | | | | | |
| conductivity mS /cm | | | | | | | | |
| T °C | | | | | | | | |
| pH °C | | **9.9** | | | | | | |
| REDOX | | **-183** | | | | | | |
| Composition: ethylendiamine / acetic acid | | 100 | 90 | 80 | 60 | 40 | 20 | 5 |
| water | | 0 | 10 | 20 | 40 | 60 | 80 | 95 |

| | **°C** | **VISCOSITY mPas** | | | ***Bohlin VOR viscosity*** | | ***shear rate 23.1 1*/*s*** | |
|---|---|---|---|---|---|---|---|---|
| | | | | | Brookfield DV-I viscosity | | | 20 rpm sp3 |
| viscosity mPas / | -30 | | | | | | | |
| | -20 | | | | | | | |
| | -10 | | | | | | | |
| | 0 | | | | | | | |
| | 10 | | | | ***19.2*** | ***7*** | ***2.5*** | ***1.6*** |
| | 20 | ***hard wax*** | ***different crystals*** | ***long crystals*** | ***13*** | ***5*** | ***2*** | ***1.3*** |
| | 40 | | | | ***6.5*** | ***3*** | ***1.4*** | ***0.9*** |
| | 60 | | | | ***5*** | ***2*** | ***1.3*** | ***0.85*** |
| conductivity mS /cm | | hard | 2.84 | 5.66 | 15.6 | 25.2 | 23.8 | 9.61 |
| T °C | | | 26.9 | 26.8 | 26.6 | 26.6 | 26.2 | 26.2 |
| | | | porridge precipitated | | | | | |
| pH measurement: temperature same as in conductivity measurement | | | 8.52 | 8.36 | 8.23 | 8.16 | 8.09 | 7.98 |
| | | | crystalline mush | sticky crystals | | | | |
| REDOX POTENTIAL | | | | | +5 | +42 | +63 | +90 |
| Composition: ethylendiamine / lactic acid | | 100 | 90 | 80 | 60 | 40 | 20 | 5 |
| water | | 0 | 10 | 20 | 40 | 60 | 80 | 95 |
| | yellow oily liquid | | | | | | | |

| | °C | VISCOSITY mPas | | | **Bohlin VOR vis-cosity** | | **shear rate 23.1 1/s** | |
|---|---|---|---|---|---|---|---|---|
| | | | | | Brookfield DV-I viscosity | | 20 rpm sp3 | |
| viscosity mPas / | -30 | | | | | | | |
| | -20 | | | | | | | |
| | -10 | | | | | | | |
| | 0 | | 10300 | 910 | 60 | 24 | | |
| | 10 | **74130** | **2647** | **308** | **26** | **6.4** | **2.6** | **1.8** |
| | 20 | **18700** | **1013** | **151** | **16** | **4.6** | **2** | **1.4** |
| | 40 | **2460** | **250** | **49** | **8** | **2.7** | **1.3** | **1.1** |
| | 60 | **650** | **76** | **21** | **5** | **2** | **0.8** | **0.7** |
| conductivity mS /cm | | 0.218 | 1.246 | 4.77 | 19.9 | 37.3 | 38 | 16 |
| T °C | | 25.1 | 25.7 | 24.7 | 24.7 | 24.4 | 24.2 | 24.2 |
| pH °C 25 | | 8.03 | 7.87 | 7.7 | 7.52 | 7.37 | 7.25 | 6.98 |
| REDOX | | -23 | +1 | +6 | +32 | +48 | +62 | +59 |
| Composition: ethylendiamine / formic acid | | **100** | **90** | **80** | **60** | **40** | **20** | **5** |
| water | | **0** | **10** | **20** | **40** | **60** | **80** | **95** |

| | °C | **VISCOSITY mPas** | | | **Bohlin VOR viscosity** | | **shear rate 23.1 1/s** | |
|---|---|---|---|---|---|---|---|---|
| | | | | | Brookfield DV-I viscosity | | 20 rpm sp3 | |
| viscosity mPas / | -30 | | | | | | | |
| | -20 | | | | | | | |
| | -10 | | | | | | | |
| | 0 | | | | | | | |
| | 10 | | | **16** | **5.6** | **2.8** | **1.9** | **1.5** |
| | 20 | | | **11** | **4.3** | **2.3** | **1.4** | **1.2** |
| | 40 | | | **6** | **2.7** | **1.8** | **1** | **0.8** |
| | 60 | | | **4** | **2** | **1.2** | **0.9** | **0.7** |
| conductivity mS/cm | | **solid *** | **18.6** | **30.4** | **50.3** | **55.9** | **40.7** | **13.7** |
| T °C | | | **23** | **22.8** | **22.7** | **22.6** | **22.5** | **22.5** |
| | | | | | | | | |
| pH °C 22 | | **7.15** | **6.99** | **6.86** | **6.62** | **6.49** | **6.35** | **6.24** |
| *conductivity measurement can be done at about 60°C | | **crystalline** | **crystalline** | | | | | |
| REDOX | | | | **-390** | **-220** | **-130** | **-85** | **-18** |
| ethylendiamine / propionic acid | | 100 | 90 | 80 | 60 | 40 | 20 | 5 |
| water | | 0 | 10 | 20 | 40 | 60 | 80 | 95 |
| | | | | | | | | |

| | **°C** | **VISCOSI TY mPas** | | | *Bohlin VOR viscosity* | | ***shear rate 23.1 1*/*s*** | |
|---|---|---|---|---|---|---|---|---|
| | | | | | Brookfield DV-I viscosity | | 20 rpm sp3 | |
| viscosity mPas / | -30 | | | | | | | |
| | -20 | | | | | | | |
| | -10 | | | | | | | |
| | 0 | | | | | | | |
| | 10 | | | | ***21*** | ***7*** | ***3*** | ***1.6*** |
| | 20 | ***hard crystalline*** | | ***2*/*3 crystalline*** | ***14*** | ***4.9*** | ***2*** | ***1.4*** |
| | 40 | | | | ***7*** | ***2.9*** | ***1.5*** | ***1*** |
| | 60 | | | | ***4*** | ***1.8*** | ***1.1*** | ***0.85*** |
| conductivity mS /cm | | solid | ei lam. | 5.15 | 11.9 | 19.1 | 19.1 | 8.53 |
| T °C | | | | 25.8 | 25.8 | 25.6 | 25.5 | 25.8 |
| | | | | (crystalline) | | | | |
| pH °C 25 | | | | 8.52 | 8.32 | 8.17 | 8.08 | 7.97 |
| REDOX | | | | plenty of precipitation | crystals | -23 | -2 | +27 |
| Composition: triethanolamine / acetic acid | | 100 | 90 | 80 | 60 | 40 | 20 | 5 |
| water | | 0 | 10 | 20 | 40 | 60 | 80 | 95 |
| | | | | | | | | |

| | °C | VISCOSI TY mPas | | | **Bohlin VOR vis-cosity** | | **shear rate 23.1 1/s** | |
|---|---|---|---|---|---|---|---|---|
| | | | | | Brookfield DV-I viscosity | | | |
| viscosity mPas / | -30 | | | | | | | |
| | -20 | | | | | | | |
| | -10 | | | | | | | |
| | 0 | crystallized | 41900 | 260 | 65 | 22 | 12 | crystals formed |
| | 10 | **15090** | **1810** | **104** | **28** | **6.4** | **2.6** | **1.6** |
| | 20 | **5252** | **759** | **58** | **18** | **4.6** | **2** | **1.3** |
| | 40 | **1060** | **191** | **23** | **9** | **2.8** | **1.4** | **0.9** |
| | 60 | **230** | **62** | **12** | **5** | **1.9** | **1.1** | **0.9** |
| | | | | | | | | |
| conductivity mS /cm | | 0.158 | 0.935 | 5.45 | 12.08 | 23.7 | 24.6 | 10.36 |
| T °C | | 26.5 | 26.1 | 25.9 | 25.8 | 25.6 | 25.7 | 25.5 |
| | | | | | | | | |
| pH temperature in measurement same as in conductivity measurement | | 6.91 | 6.81 | 6.71 | 6.63 | 6.55 | 6.49 | 6.46 |
| REDOX | | -58 | -49 | -21 | +7 | +41 | +66 | +96 |
| Composition: triethanolamine / lactic acid | | 100 | 90 | 80 | 60 | 40 | 20 | 5 |
| water | | 0 | 10 | 20 | 40 | 60 | 80 | 95 |
| | | | | | | | | |

| | **°C** | **VISCOSITY mPas** | | | ***Bohlin VOR vis-cosity*** | | ***shear rate 23.1 1*/*s*** | |
|---|---|---|---|---|---|---|---|---|
| | | | | | Brookfield DV-I viscosity | | | 20 rpm sp3 |
| viscosity mPas / | -30 | | | | | | | |
| | -20 | >20000 | 19800 | | | | | |
| | -10 | >20000 | 5050 | | | | | |
| | 0 | 24300 | 1950 | | | | | |
| | 10 | ***10760*** | ***1067*** | ***228*** | ***21.1*** | ***5.7*** | ***2.5*** | ***1.7*** |
| | 20 | ***3955*** | ***452*** | ***120*** | ***13.7*** | ***4.4*** | ***2*** | ***1.4*** |
| | 40 | ***736*** | ***119*** | ***41*** | ***7.2*** | ***2.4*** | ***1.4*** | ***0.9*** |
| | 60 | ***240*** | ***45*** | ***19*** | ***4.3*** | ***1.7*** | ***1*** | ***0.9*** |
| | | | | | | | | |
| conductivity mS /cm | | 0.207 | 0.934 | 3.46 | 10.16 | 17.4 | 17.1 | 6.73 |
| T °C | | 25.1 | 25.2 | 24.8 | 25 | 24.9 | 24.9 | 24.8 |
| | | | | | | | | |
| pH temperature in measurement same as in conductivity measurements | | 7.33 | 7.22 | 7.17 | 7.17 | 7.18 | 7.21 | 7.22 |
| REDOX | | -97 | -121 | -115 | -33 | +9 | +39 | +63 |
| Composition: : triethanolamine / formic acid | | 100 | 90 | 80 | 60 | 40 | 20 | 5 |
| water | | 0 | 10 | 20 | 40 | 60 | 80 | 95 |
| | | | | | | | | |

| | °C | mPas | | | **Bohlin VOR viscosity** | | **shear rate 23.1 1/s** | |
|---|---|---|---|---|---|---|---|---|
| | | | | | Brookfield DV-I viscosity | | 20 rpm sp3 | |
| viscosity mPas / | -30 | | | | | | | |
| | -20 | | | | | | | |
| | -10 | | | | | | | |
| | 0 | | | | | | | |
| | 10 | hard | **558** | **138** | **9.3** | **4.5** | **2.3** | **1.6** |
| | 20 | hard | **296** | **80** | **6.8** | **3.5** | **1.8** | **1.3** |
| | 40 | | **94** | **33** | **4** | **2.2** | **1.3** | **0.9** |
| | 60 | | **42** | **17** | **2.6** | **1.8** | **1.1** | **0.7** |
| | | | | | | | | |
| conductivity mS/cm | | Hard crystalline | 2.54 | 7.05 | 31.5 | 40.7 | 36.4 | 14.2 |
| T °C | | | 24.7 | 24.6 | 24.5 | 24.7 | 24.5 | 24.5 |
| | | | | | | | | |
| pH temperature in measurement same as in conductivity measurements | | | 6.23 | 6.19 | 6.16 | 5.95 | 6.19 | 6 |
| | | | 1/2 | | | | | |
| REDOX | | | crystallized | -410 | -231 | -170 | -102 | -24 |
| Composition: : triethanolamine / propionic acid | | 100 | 90 | 80 | **60** | 40 | 20 | 5 |
| water | | 0 | 10 | 20 | 40 | 60 | 80 | 95 |
| | | | | | | | | |

| | **°C** | **VISCOSITY mPas** | | | ***Bohlin VOR vis-cosity*** | | ***shear rate 23.1 1*/*s*** | |
|---|---|---|---|---|---|---|---|---|
| | | | | | Brookfield DV-I viscosity | | | 20 rpm sp3 |
| viscosity mPas / | -30 | | | | | | | |
| | -20 | | | | | | | |
| | -10 | | | | | | | |
| | 0 | 15000 | 2930 | 620 | 70 | 20 | 12 | froze |
| | 10 | ***5941*** | ***960*** | ***262*** | ***34*** | ***7.4*** | ***2.8*** | ***1.6*** |
| | 20 | ***2150*** | ***485*** | ***134*** | ***21*** | ***5.4*** | ***2.1*** | ***1.3*** |
| | 40 | ***490*** | ***120*** | ***45*** | ***10.4*** | ***3*** | ***1.5*** | ***0.9*** |
| | 60 | ***145*** | ***44*** | ***20*** | ***6.5*** | ***2*** | ***0.8*** | ***0.7*** |
| | | | | | | | | |
| conductivity mS /cm | | 0.24 | 0.868 | 2.25 | 6.52 | 17.6 | 19.4 | 8.53 |
| T °C | | 24.7 | 24.6 | 24.6 | 24.5 | 24.4 | 24.3 | 24.3 |
| | | | | | | | | |
| pH temperature in measurement same as in conductivity measurements | | 7.22 | 7.23 | 6.99 | 6.81 | 6.7 | 6.62 | 6.56 |
| REDOX | | -117 | -104 | -140 | -60 | -11 | +26 | +73 |

As can be seen from table 4 the viscosity of compositions varies considerably depending on the quality of the fluid in a composition and fluid - solvent proportion (w/w). For example instead of using formic acid and monoethanolamine (at least 40 wt-% aqueous solvent) as demonstrated in example 2 one could also use monoethanolamine and acetic acid (at least 40 wt-% aqueous solvent) or monoethanolamine and lactic acid (at least 20 wt-% aqueous solvent) as an heat transfer composition. No solid crystals will be formed for instance if one uses combination ethanol amine / formic acid as a heat transfer fluid (compare table 2 above). Avoiding solid crystals is also a beneficial property for instance for an anti- freezing and a de-icing fluid.

Heat capacities for fluids and diluted fluid solutions in examples 1-23 were found to be between (2100-2500) J/kgK. As can be seen from table 4 their REDOX potential varied from ca -300 mV to +200 mV depending on fluid and water content of a composition. This gives interesting possibilities to choose pH and redox-potential. Some specific properties like heat transfer, anti corrosion, anti microbial activity, wetting, contact angle, power to disperse, chemical stability should be assessed for the final formulations.

Example batch operated apparatus assembly and their use have been described above.

## Claims

1. The use of composition comprising liquid or water-soluble organic ammonium carboxylate of formula (1):
[NR¹R²R³R⁴]⁺ₙ, [R⁵(COO)ₙ]⁻ⁿ, (1),
in which R¹ and R² are hydrogen, R³ is selected from the group comprising hydrogen and C₁-C₄-alkyls substituted with a hydroxyl group, R⁴ is a substituted alkyl containing 1-6 carbon atoms and substituted with a hydroxyl group, preferably a C₁-C₄-alkyl substituted with a hydroxyl group, R⁵ is hydrogen, a substituted or unsubstituted alkyl containing 1-6 carbon atoms, preferably a substituted or unsubstituted alkyl containing 1-4 carbon atoms, more preferably hydrogen, methyl or ethyl, and n is 1 or 2, preferably 1 and the viscosity of 0.1- 50, 000 mPas and
the electrical conductivity in a range of 0.05-100 mS/cm preferably in a range of 1.0 -100 mS/cm, wherein alkali or alkali-earth metal content is kept in amount of 0.001-1.0 wt-%,
as a deicer or as an anti-icer or as a freezing point depressant with low corrosive properties.

2. The use defined in claim 1, wherein the organic ammonium carboxylate of formula (1) is such that R¹ and R² are hydrogen, R³ is selected from the group comprising hydrogen and ethyl substituted with a hydroxyl group, preferably in the group comprising hydrogen and 2-hydroxyethyl, and R⁴ is an ethyl substituted with a hydroxyl group, preferably 2-hydroxy ethyl.

3. The use defined in claim 1, wherein the organic ammonium carboxylate of formula (1) is a salt of formic acid and monoethanolamine or a salt of lactic acid and monoethanolamine.

4. The use as defined in claim 1, wherein the organic ammonium carboxylate of formula (1) is prepared in the form of an aqueous solution, in which the ammonium carboxylate concentration is in the range 5-70 wt-% while the freezing point of the composition is kept in the range of -5 to -50°C.

5. The use as defined in claim 4, wherein the prepared aqueous solution of organic ammonium carboxylate of formula (1) contains organic ammonium carboxylate of formula (1) and water in a weight ratio in the range 1:20-20:1, preferably in the range 1:6-1:1.

6. The use as defined in claim 1 wherein the organic ammonium carboxylate of formula (1) contains formic acid and monoethanolamine or acetic acid and monoethanolamine or lactic acid and monoethanolamine.

7. The use as defined in claim 1, wherein into a liquid or water-soluble organic ammonium carboxylate of formula (1) and possible solvent is additionally mixed an ammonium salt of C₁-C₆ monocarboxylic acids or urea or ethylene glycol or propylene glycol, or glycerol or a mixture thereof so that the composition contains 5 to 97.5 wt-% of water or an ammonium salt of C₁-C₆ monocarboxylic acids or urea or ethylene glycol or propylene glycol, or glycerol or lower alkanol, preferably methanol or ethanol or a mixture thereof provided that alkali or alkali-earth metal content is kept in amount of 0.001-1.0 wt.-%.

8. The use as defined in any of claims 1 to 7, wherein into the composition is included auxiliary substances such as additional corrosion inhibitors, biocides, coloring agents, surfactants, and viscosity intensifiers from 0.001 to 10 wt-%.

9. The use defined in any of the previous claims wherein the organic ammonium carboxylate of formula (1) is used for airfield pavement deicing or aircraft deicing and anti-icing.

## Patentansprüche

1. Verwendung einer Zusammensetzung umfassend flüssiges oder wasserlösliches organisches Ammoniumcarboxylat der Formel (1):
[NR¹R²R³R⁴]⁺ₙ[R⁵(COO)ₙ⁻ⁿ (1),
wobei R¹ und R² Wasserstoff sind, R³ aus der Gruppe ausgewählt ist umfassend Wasserstoff und C₁-C₄-Alkyle, die mit einer Hydroxylgruppe substituiert sind, R⁴ ein substituiertes Alkyl ist, das 1-6 Kohlenstoffatome enthält und mit einer Hydroxylgruppe, bevorzugt einem mit einer Hydroxylgruppe substituierten C₁-C₄-Alkylen substituiert ist, R⁵ Wasserstoff, ein substituiertes oder unsubstituiertes Alkyl, das 1-6 Kohlenstoffatome enthält, bevorzugt ein substituiertes oder unsubstituiertes Alkyl, das 1-4 Kohlenstoffatome enthält, noch bevorzugter Wasserstoff, Methyl oder Ethyl ist, und n 1 oder 2, bevorzugt 1 beträgt, und die Viskosität von 0,1-50,000 mPas und die elektrische Leitfähigkeit in einem Bereich von 0,05-100 mS/cm, bevorzugt in einem Bereich von 1,0-100 mS/cm, wobei der Alkali- oder Erdalkalimetallgehalt in einer Menge von 0,001-1,0 Gew.-% gehalten wird,
als Enteiser oder als Vereisungsschutz oder als Gefrierpunkt reduzierendes Mittel mit geringen Korrosionseigenschaften.

2. Verwendung, die in Anspruch 1 definiert ist, wobei das organische Ammoniumcarboxylat der Formel (1) derart ist, dass R¹ und R² Wasserstoff sind, R³ aus der Gruppe ausgewählt ist umfassend Wasserstoff und Ethyl, das mit einer Hydroxylgruppe, bevorzugt in der Gruppe, die Wasserstoff und 2-Hydroxyethyl umfasst, substituiert ist und R⁴ ein Ethyl ist, das mit einer Hyrdoxylgruppe, bevorzugt 2-Hydroxyethyl, substituiert ist.

3. Verwendung, die in Anspruch 1 definiert ist, wobei das organische Ammoniumcarboxylat der Formel (1) ein Salz von Ameisensäure und Monoethanolamin oder ein Salz von Milchsäure und Monoethanolamin ist.

4. Verwendung wie in Anspruch 1 definiert, wobei das organische Ammoniumcarboxylat der Formel (1) in Form einer wässrigen Lösung hergestellt wird, in der die Ammoniumcarboxylatkonzentration im Bereich von 5-70 Gew.-% liegt, während der Gefrierpunkt der Zusammensetzung im Bereich von -5 bis -50 °C gehalten wird.

5. Verwendung wie in Anspruch 4 definiert, wobei die hergestellte wässrige Lösung von organischem Ammoniumcarboxylat der Formel (1) organisches Ammoniumcarboxylat der Formel (1) und Wasser in einem Gewichtsverhältnis im Bereich von 1:20-20:1, bevorzugt im Bereich von 1:6-1:1 enthält.

6. Verwendung wie in Anspruch 1 definiert, wobei das organische Ammoniumcarboxylat der Formel (1) Ameisensäure und Monoethanolamin oder Essigsäure und Monoethanolamin oder Milchsäure und Monoethanolamin enthält.

7. Verwendung wie in Anspruch 1 definiert, wobei, in ein flüssiges oder wasserlösliches organisches Ammoniumcarboxylat der Formel (1) und möglicherweise Lösungsmittel, zusätzlich ein Ammoniumsalz von C₁-C₆-Monocarbonsäuren oder Harnstoff oder Ethylenglykol oder Propylenglykol oder Glycerin oder eine Mischung davon gemischt wird, sodass die Zusammensetzung 5 bis 97,5 Gew.-% Wasser oder eines Ammoniumsalzes von C₁-C₆-Monocarbonsäuren oder Harnstoff oder Ethylenglykol oder Propylenglykol oder Glycerin oder niederem Alkohol, bevorzugt Methanol oder Ethanol oder einer Mischung davon enthält, vorausgesetzt, dass der Alkali- oder Erdalkalimetallgehalt in einer Menge von 0,001-1,0 Gew.-% erhalten wird.

8. Verwendung wie in einem der Ansprüche 1 bis 7 definiert, wobei in die Zusammensetzung Hilfssubstanzen wie beispielsweise zusätzliche Korrosionshemmer, Biozide, Farbmittel, Tenside und Viskositätsverstärker von 0,001 bis 10 Gew.-% integriert werden.

9. Verwendung wie in einem der vorhergehenden Ansprüche definiert, wobei das organische Ammoniumcarboxylat der Formel (1) zum Enteisen von Flugplatzpflaster oder Flugzeugenteisen und Vereisungsschutz verwendet wird.

## Revendications

1. Utilisation d'une composition comprenant un carboxylate d'ammonium organique liquide ou hydrosoluble de formule (1) :
[NR¹R²R³R⁴]⁺ₙ[R⁵(COO)ₙ]⁻ⁿ (1),
dans laquelle R¹ et R² représentent un hydrogène, R³ est sélectionné dans le groupe comprenant un hydrogène et des groupes alkyle en C₁ à C₄ substitués par un groupe hydroxyle, R⁴ représente un groupe alkyle substitué contenant 1 à 6 atomes de carbone et substitué par un groupe hydroxyle, de préférence un groupe alkyle en C₁ à C₄ substitué par un groupe hydroxyle, R⁵ représente un hydrogène, un groupe alkyle substitué ou non substitué contenant 1 à 6 atomes de carbone, de préférence un groupe alkyle substitué ou non substitué contenant 1 à 4 atomes de carbone, plus préférablement un hydrogène, un groupe méthyle ou un groupe éthyle, et n représente 1 ou 2, de préférence 1 et la viscosité de 0,1 à 50 000 mPa et la conductivité électrique dans une plage de 0,05 à 100 mS/cm, de préférence dans une plage de 1,0 à 100 mS/cm, dans laquelle la teneur en métal alcalin ou alcalino-terreux est maintenue à une quantité de 0,001 à 1,0 % en poids,
en tant qu'agent dégivrant ou en tant qu'agent antigivre ou en tant qu'agent diminuant le point de congélation avec de faibles propriétés corrosives.

2. Utilisation telle que définie dans la revendication 1, dans laquelle le carboxylate d'ammonium organique de formule (1) est tel que R¹ et R² représentent un hydrogène, R³ est sélectionné dans le groupe comprenant un hydrogène et un groupe éthyle substitué par un groupe hydroxyle, de préférence dans le groupe comprenant un hydrogène et un groupe 2-hydroxyéthyle, et R⁴ représente un groupe éthyle substitué par un groupe hydroxyle, de préférence un groupe 2-hydroxyéthyle.

3. Utilisation telle que définie dans la revendication 1, dans laquelle le carboxylate d'ammonium organique de formule (1) est un sel d'acide formique et de monoéthanolamine ou un sel d'acide lactique et de monoéthanolamine.

4. Utilisation telle que définie dans la revendication 1, dans laquelle le carboxylate d'ammonium organique de formule (1) est préparé sous la forme d'une solution aqueuse, dans laquelle la concentration en carboxylate d'ammonium est dans la plage de 5 à 70 % en poids tandis que le point de congélation de la composition est maintenu dans la plage de -5 à -50 °C.

5. Utilisation telle que définie dans la revendication 4, dans laquelle la solution aqueuse préparée de carboxylate d'ammonium organique de formule (1) contient le carboxylate d'ammonium organique de formule (1) et de l'eau selon un rapport en poids dans la plage de 1:20 à 20:1, de préférence dans la plage de 1:6 à 1:1.

6. Utilisation telle que définie dans la revendication 1, dans laquelle le carboxylate d'ammonium organique de formule (1) contient de l'acide formique et de la monoéthanolamine ou de l'acide acétique et de la monoéthanolamine ou de l'acide lactique et de la monoéthanolamine.

7. Utilisation telle que définie dans la revendication 1, dans laquelle dans un carboxylate d'ammonium organique liquide ou hydrosoluble de formule (1) et un possible solvant, un sel d'ammonium d'acides monocarboxyliques en C₁ en C₆ ou de l'urée ou de l'éthylène glycol ou du propylène glycol, ou du glycérol ou un mélange de ceux-ci est en outre mélangé de sorte que la composition contienne de 5 à 97,5 % en poids d'eau ou d'un sel d'ammonium ou d'urée ou d'éthylène glycol ou de propylène glycol, ou de glycérol ou d'un alcanol inférieur, de préférence du méthanol ou de l'éthanol ou d'un mélange de ceux-ci à condition que la teneur en métal alcalin ou alcalino-terreux est maintenue à une quantité de 0,001 à 1,0 % en poids.

8. Utilisation telle que définie dans l'une quelconque des revendications 1 à 7, dans laquelle dans la composition, sont incluses des substances auxiliaires telles que des inhibiteurs de corrosions, des biocides, des agents colorants, des tensioactifs et des intensificateurs de viscosité additionnels de 0,001 à 10 % en poids.

9. Utilisation telle que définie dans l'une quelconque des revendications précédentes, dans laquelle le carboxylate d'ammonium organique de formule (1) est utilisé pour le dégivrage des chaussées aéroportuaires ou pour le dégivrage et l'anti-givrage d'avions.
